Europäisches Patentamt

European Patent Office

Office européen des brevets

(19)

(11) Veröffentlichungsnummer: **0 335 186**
**A2**

## (12) EUROPÄISCHE PATENTANMELDUNG

(21) Anmeldenummer: **89104667.4**

(22) Anmeldetag: **16.03.89**

(51) Int. Cl.⁴: **H01B 1/22** , **C08K 7/06**

(30) Priorität: **29.03.88 DE 3810598**

(43) Veröffentlichungstag der Anmeldung:
**04.10.89 Patentblatt 89/40**

(84) Benannte Vertragsstaaten:
**BE CH DE FR GB IT LI NL**

(71) Anmelder: **BAYER AG**

**D-5090 Leverkusen 1 Bayerwerk(DE)**

(72) Erfinder: **Mazanek, Jan, Dr.**
**Haferkamp 2**
**D-5000 Köln 80(DE)**
Erfinder: **Goldmann, Gerd, Dr.**
**Emil-Feinendegen-Strasse 1**
**D-4150 Krefeld 12(DE)**
Erfinder: **von Gizycki, Ulrich, Dr.**
**Wiembachallee 24**
**D-5090 Leverkusen 3(DE)**
Erfinder: **Giesecke, Henning, Dr.**
**Düsseldorfer Strasse 45**
**D-5000 Köln 80(DE)**

(54) **Metallfasern enthaltende Verbundstoffe sowie deren Verwendung zur Herstellung von Formteilen zur Abschirmung von elektromagnetischer Strahlung.**

(57) Zur Herstellung von Formteilen zur Abschirmung von elektromagnetischer Strahlung eignen sich hervorragend metallfaserhaltige Verbundstoffe, wie man sie erhält durch Imprägnieren eines Bündels aus endlosen Metallfasern mit einer polymeren haftvermittelnden Substanz, Ummantelung des dabei erhaltenen kompakten Precursors mit einer thermoplastischen Matrix und Zerschneiden des entstandenen Verbundstoffstranges in definierte Längen.

Die Verbundstoffe können als solche oder gemeinsam mit Thermoplast-Granulaten eingesetzt werden.

EP 0 335 186 A2

## Metallfasern enthaltende Verbundstoffe sowie deren Verwendung zur Herstellung von Formteilen zur Abschirmung von elektromagnetischer Strahlung

Als Materialien für die Gehäuse elektrischer und elektronischer Geräte werden heute meistens Kunststoffe eingesetzt. Kunststoffe sind als elektrische Nichtleiter in der Regel weitgehend durchlässig für elektromagnetische Strahlung. Beim Betrieb solcher Geräte kommt es häufig zu einer ungewollten Erzeugung hochfrequenter Signale bzw. derartige Geräte sind störempfindlich gegen elektromagnetische Fremdstrahlung. Insbesondere die weitgehende Miniaturisierung von elektronischen Bauteilen hat deren Störanfälligkeit vor Fremdstrahlung stark erhöht. Ein wirksamer Schutz gegen elektromagnetische Strahlung ist somit von enormer Bedeutung.

Ausdruck dieser Entwicklung ist auch, daß es bereits eine Reihe nationaler Vorschriften (FCC, EEC, VDE, DIN) gibt, die eine Begrenzung der erzeugten Störfeldstärken beinhalten. Bereits heute werden eine Reihe von Maßnahmen angewendet, Kunststoffteile abschirmend auszurüsten. Als Beispiele seien die chemische und physikalische Metallisierung der Oberflächen, das Aufbringen leitfähiger Lacke und das Flammsprühverfahren genannt. Auch das Beimengen von abschirmend wirkenden Zusatzstoffen zu den Kunststoffen wird seit einiger Zeit versucht und auch technisch angewandt. Als Beispiele seien Zusätze von Stahlfasern, Kohlenstoffasern, Metallflakes, Metallpulver und von metallisierten Fasern genannt. Ein universell anwendbares preisgünstiges Verfahren zur Abschirmung von Kunststoffgehäusen ist bisher nicht gefunden worden. Den Metallisierungsverfahren steht bisher ihr hoher Preis, bedingt durch viele Verfahrensschritte und damit hohen technischen Investitionen, entgegen. Zudem sind die erzeugten Metalloberflächen entweder zu empfindlich oder zu unansehnlich, so daß sie mit einer zusätzlichen Lackschicht versehen werden müssen.

Auch die Beimengung von abschirmend wirkenden Zusätzen hat sich bisher nicht durchsetzen können. Hauptursachen dafür waren entweder der hohe Preis der Zusätze, die hohen Mengen an Zusätzen und die damit verbundene Beeinträchtigung der mechanischen Kenndaten der Kunststoffmaterialien und die Beeinträchtigung der Oberflächenqualität, Ungleichmäßigkeiten bei der Verteilung der Füllstoffe in den Kunststoffen oder die Beeinträchtigung der Abschirmwirkung der Füllstoffe durch den Verarbeitungsprozeß.

Im Zusammenhang mit der elektromagnetischen Abschirmung ist es wichtig, anzugeben, welche Frequenzbereiche und welche Komponenten des elektromagnetischen Feldes in welchem Umfang abgeschirmt werden müssen. Während einer Abschirmung hochfrequenter Felder (GHz-Bereich) im Fernfeld und die Abschirmung der elektrischen Komponente niederfrequenter Felder im Nahfeld noch relativ einfach technisch zu bewältigen ist, bereitet insbesondere die Abschirmung der magnetischen Komponente niederfrequenter Felder (MHz-Bereich) im Nahfeld große technische Probleme.

Es hat daher nicht an Versuchen gefehlt, thermoplastische Materialien mit abschirmend wirkenden Füllstoffen so auszurüsten, daß daraus spritzgegossene Gehäuseteile hinreichend abschirmen.

Derartige Verfahren sind z. B. in der nachstehend aufgeführten Patentliteratur beschrieben:

JP-A 58/176 220, JP-A 61/057 626, JP-A 60/054 967, JP-A 61/100 415, JP-A 60/134 500, JP-A 62/860 53, JP-A 61/152 766, JP-A 62/ 96 564, JP-A 60/248 119, JP-A 59/109 537, JP-A 59/499 133, JP-A 58/104 907, US-A 4 664 971, US-A 4 500 595, EP-A 112 197, EP-B 131 067.

Alle dem Stand der Technik entsprechenden Verfahren weisen jedoch einen oder mehrere nachfolgend genannten Nachteile auf, die vor allem die Einarbeitung von hohen Anteilen an Metallfasern und/oder den Einsatz der Spritzgußformteile bei niederen Frequenzen, insbesondere im magnetischen Nahfeld, nicht erlauben. Als Beispiele seien genannt:

- Abnutzung der Maschinen beim Spritzguß
- Verstopfung der Düsen, vor allem bei steigendem Metallfasergehalt
- unregelmäßige Verteilung der Fasern im Formteil
- hoher Preis
- bei Mischungen aus master batches und Kunststoffgranulat Probleme mit exakter Dosierung der Metallfasern
- zu geringer Durchmesser der Fasern und damit verbundene verstärkte Zerkleinerung beim Spritzguß

Es wurde nun überraschenderweise gefunden, daß diese Nachteile ganz oder teilweise überwunden werden können, wenn man zur Herstellung von Formteilen im Spritzguß weitgehend parallel ausgerichtete Metallfasern enthaltende Verbundstoffe einsetzt, die man erhält durch Imprägnieren eines Faserbündels aus endlosen Metallfasern, die einen durchschnittlichen Durchmesser von 35 - 200 μm aufweisen, mit einer polymeren, haftvermittelnden Substanz und Ummantelung des dabei erhaltenen kompakten Precursors mit einer thermoplastischen Matrix und Zerschneiden des entstandenen Verbundstoffstranges in definierte Längen.

Die Längen der Verbundstoff-Abschnitte betragen 1 - 70, vorzugsweise 2 - 40 und besonders bevorzugt 3 - 20 mm.

Unter Metallfasern sollen metallisch leitende endlose Fasern, Drähte und Stäbe verstanden werden. Die Fasern können als Einzelfasern, Rovings, Stränge, Garne, Zwirne, Litzen oder Seile vorliegen. Als erfindungsgemäß verwendbare Metallfasern kommen besonders solche in Betracht, die einen spezifischen elektrischen Widerstand von unterhalb $5 \cdot 10^6 \Omega \cdot cm$ aufweisen. Beispielsweise seien folgende Materialien genannt: Aluminium, Gold, Silber und vor allem Kupfer sowie deren Legierungen auch mit anderen Metallen, wobei die einzelne Faser auch schichtartig aus verschiedenen Metallen aufgebaut sein kann.

Außerdem sind weichmagnetische Metalle geeignet, wie Eisen, Nickel, Kobalt und deren Legierungen.

Unter Metallfasern sollen auch Fasern aus zwei oder mehreren Metallen verstanden werden, wie sie beispielsweise durch elektrolytische Überzüge eines Metalls auf einem Kern aus einem anderen Metall entstehen. Auch Kombinationen aus Metallen und Nichtleitern sind eingeschlossen.

Ebenso sind beliebige Kombinationen aus Fasern verschiedener Metalle, aus Metallen und metallisierten Fasern oder aus Metallen und Kohlenstoff- und/oder Graphitfasern oder aus Metallen und Nichtleitern einsetzbar. Die Metalle und/oder weitere Fasern können gleiche oder verschiedene Durchmesser aufweisen. Selbstverständlich ist es auch möglich, einen Precursor aus Metallfasern und nichtleitenden Fasern herzustellen.

Unter endlosen Fasern soll verstanden werden, daß man von Materialien großer Lieferlängen ausgeht, die kontinuierlich abgezogen werden. Die Mindestlänge soll 50 Meter betragen. Der Durchmesser der Metallfasern liegt bevorzugt bei 40 - 100 µm, besonders bevorzugt bei 40 -80 µ.

Zur Imprägnierung der Metallfasern kommen Duromere, Elastomere, Thermoplaste oder andere Polymere in Frage. Besonders geeignet sind jedoch Thermoplaste. Als Beispiele für die erfindungsgemäß einzusetzenden Polymere seien genannt:

Olefin- und Polyolefin-Homo-, Pfropf- und Copolymerisate, z. B. Polyethylen, Polypropylen, Polybuten, Polyisobutylen, PVC, Ethylenvinylacetatpolymere, fluorhaltige Polymere, Polyacetale, Polystyrol, Styrol-Copolymerisate, aromatische, aliphatische und gemischte Polyester und Polyamide und -imide, Polybenzhydantoine, Polyether, Polycarbonate, Polyurethane, Polyharnstoffe und andere Polymere nach dem Polyisocyanat-Polyadditionsverfahren, Acrylsäureester-Styrol-Copolymere, Styrol-Butadien- und Styrol-Butadien-N-Vinylpyridin-Copolymere, Chlorbutadien- und Polybutadien-(Co)polymere, Butadien-Acrylnitril-Polymere, carboxylierte Styrol-Butadien-Copolymere, Chloropren-(Co)polymere, Styrol-Acrylnitril-Polymerisate, Polyacrylate, Polyphenylenoxid, Polysulfide, PPS, Polysulfone, Polyethansulfone, Celluloseester, Aminoplaste, Phenolplaste, Epoxidharze und Alkydharze verschiedener Zusammensetzung usw. Sie können sowohl in Substanz als auch in Lösungen oder als Dispersionen eingesetzt werden. Auch beliebige Blends und Mischungen dieser Polymere sind möglich.

Die Polymere können gegebenenfalls auch weitere Zusätze wie Plastifizierungsmittel, Antioxidantien, Trennmittel, Wachse oder andere Polymeraddidive, wie sie z. B. in E. W. Flick: Plastics Additives, Noyes Publications, Park Ridge, New Jersey, USA, beschrieben sind, enthalten.

Der Herstellung der erfindungsgemäßen Verbundstoffe erfolgt bevorzugt nach neuen Verfahren, bei denen zunächst ein Gebilde aus dünnen endlosen Metallfasern intensiv mit einem Polymeren zu einem kompakten linearen oder flächigen Precursor imprägniert wird, dann dieser Precursor mit einem Thermoplasten ummantelt oder beschichtet und anschließend zerkleinert wird.

Zur Herstellung des Precursors können die endlosen Fasern in Form von einem oder mehreren annähernd parallel ausgerichteten runden oder flachen Bündeln, als Flächengebilde mit annähernd parallel ausgerichteten Fasern oder als textile Gebilde vorliegen. Solche textile Gebilde sind beispielsweise Gewebe, Gewirke, Geflechte oder Gelege.

Führt man einzelne Fasern oder Drähte parallel in die Imprägniereinrichtung ein, ist eine vorherige Verarbeitung der Fasern zu Kettbäumen durch Schären oder Zetteln vorteilhaft.

Geeignete Verfahren zur Imprägnierung des Fasergebildes unterscheiden sich nach der Art der Aufbringung des Polymeren. Bei Thermoplasten kann der Kunststoff aus der Schmelze, aus Lösungen oder Suspensionen, in Form von Pulver, Folien, Fasern, Folienbändchen oder durch in-situ-Polymerisation aufgebracht werden. Duromere werden als reaktive Systeme dünnflüssig auf die Fasern aufgebracht und anschließend vernetzt. Auch ein Imprägnieren mit Elastomerlatices ist möglich.

Der Kunststoff kann auf einmal oder in mehreren Portionen unterteilt nacheinander aufgebracht werden. Es ist auch möglich, verschiedene Anteile desselben Thermoplasten in verschiedener Form einzubringen, beispielsweise einen ersten Teil aus einer Lösung und nach dem Entfernen des Lösungsmittels einen zweiten Teil aus einer Schmelze. Ebenso können auch verschiedene Kunststoffe nacheinander aufgebracht werden, beispielsweise zunächst eine Elastomerschicht aus dem Latex und anschließend eine thermoplastische Schicht aus der Schmelze.

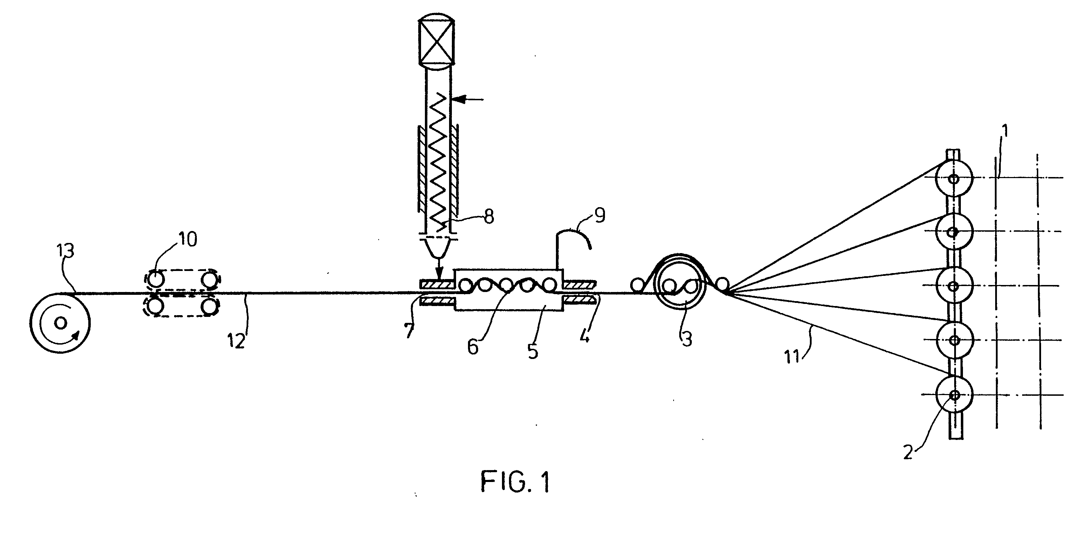

Figur 1 zeigt ein mögliches Verfahren zur Durchführung des Imprägnierens. Von einem Gatter 1 werden die Metallfasern 11 von Spulen oder Kettbäumen 2 abgezogen. Verwendet werden 20 bis 3.000, bevorzugt 50 bis 1200, Einzelfasern. Anschließend erfolgt eine Ausrichtung und Ordnung in einem nur schematisch angedeuteten Rollensystem 3 nach bekannten Verfahren der Textiltechnik. Anschließend wird das flache Band durch eine Schlitzdüse 4 in eine schmelzegefüllte Kammer 5 eingeführt, wo die eigentliche Imprägnierung beispielsweise durch Umlenkung mit Hilfe von Stiften 6 oder andere geeignete Imprägniersysteme durchgeführt wird. Eine anschließende Formdüse 7 gibt dem Band seine endgültige, vorzugsweise runde oder rechteckige Querschnittsform. Der Thermoplast wird mit Hilfe eines Extruders 8 beispielsweise im Gegenstrom aufgegeben, wobei am anderen Ende über die Leitung 9 der Überschuß abgezogen wird. Ein Abzugssystem, vorzugsweise ein Bandabzug 10 zieht den Precursor 12 durch die Anlage. Nachgeschaltet ist beispielsweise eine Wickelvorrichtung 13.

Bei einem anderen Verfahren tauchen die Stifte 6 nicht direkt in die Schmelze ein, sondern werden mit Thermoplastschmelze belegt, die dann durch die Stifte in das Metallfaser-Gebilde eingearbeitet wird.

Der aus der Formdüse 7 austretende Precursorstrang hat vorzugsweise runde oder rechteckige Querschnittsgeometrie. Bei runder Geometrie sind Durchmesser zwischen 1 und 5 mm vorteilhaft, bei Rechteckgeometrie Breiten zwischen 3 und 10 mm und Höhen zwischen 0,2 und 3 mm.

In einem nächsten Verfahrensschritt wird das hergestellte Precursorband mit einem thermoplastischen Polymer ummantelt.

Wird zum Ummanteln der gleiche Thermoplast eingesetzt wie der zuletzt auf den Precursor aufgebrachte Kunststoff, so wird die Ummantelung vorzugsweise direkt in der Formdüse 7 durchgeführt, dadurch daß die Düsenöffnung den gewünschten Abmessungen des erfindungsgemäßen Verbundwerkstoffes entspricht. Die Metallfasern werden dann so durch die Düsenöffnung geführt, daß sie im Zentrum des austretenden Stranges liegen. Das Ummanteln kann auch in einem völlig unabhängigen Schritt erfolgen, indem der Thermoplast nach Art der Kabelummantelung in einem Querspritzkopf oder ähnlichen Werkzeugen zwischen Formdüse 7 und Bandabzug 10 auf den fertigen Precursor 12 aufgebracht wird.

Unterscheidet sich der Thermoplast der Ummantelung von dem Matrixmaterial des Precursors, so kann die Ummantelung entweder nach Art der Koextrusion direkt in der Formdüse 7 erfolgen oder in einer nachgeschalteten Ummantelung des Precursors.

Das entstandene Verbundstoffband wird entweder sofort in Abschnitte der gewünschten Längen von 1-70, vorzugsweise 3-40, besonders bevorzugt 5-20 mm zerschnitten oder aufgerollt und als Endlosband zwischengelagert.

Nach diesem Verfahren können auch breite, flächige Precursorbahnen erzeugt werden, indem die schmelzgefüllte Kammer 6, sowie die Stifte 6 und die Düsen 4 und 7 verbreitert werden. Die Precursorbahn kann auch ohne Düse vom letzten Stift ablaufen. Auf diese Weise können flächige Gebilde von bis zu 2000 mm Breite, vorzugsweise 2-1000 mm, besonders bevorzugt 4-100 mm Breite erzeugt werden. Neben breiten parallelen Faserbündeln können auch die erwähnten Textilien, vorzugsweise Gewebe oder Gewirke verarbeitet werden.

Aus diesen flächigen Precursorbahnen wird der erfindungsgemäße Verbundstoff durch einseitige oder bevorzugt zweiseitige Beschichtung oder durch Umhüllung und anschließende Zerkleinerung gewonnen.

Die Beschichtung kann entweder direkt in der Formdüse 7 oder durch anschließende Belegung mit einem Schmelzeband aus einer Breitschlitzdüse eines Extruders oder durch Aufbringen von Folien, Pulvern, Lösungen oder polymersationsfähigen Monomersystemen erfolgen.

Ein besonders wirtschaftliches Verfahren zur Erzeugung großer Mengen des Verbundstoffes ist die Herstellung auf Doppelbandpressen, insbesondere wenn der Matrixwerkstoff des Precursors zumindest teilweise aus thermoplastischem Material besteht. Dann können Imprägnierung des Precursors und Beschichtung in einem einzigen Schritt erfolgen.

Die beiden gleichartigen oder verschiedenen Thermoplasten können bevorzugt in Form von Folien zusammen mit dem Metallfasergebilde in die Doppelbandpresse eingezogen werden.

Bevorzugt ist auch ein Verfahren, bei dem man das Metallfasergebilde mit einem Schmelzefilm des den Precursor imprägnierenden Thermoplasten belegt. Auf diese Bahn werden einseitig oder bevorzugt zweiseitig ein oder mehrere Folien des beschichtenden Thermoplasten aufgelegt und zusammen mit Metallfasergebilde und Schmelzefilm direkt in den Spalt einer Doppelbandpresse eingezogen. Bei gleichen Thermoplasten für Precursor-Imprägnierung und Beschichtung kann selbstverständlich auch eine Teilmenge des Beschichtungs-Thermoplasten oder die gesamte Thermoplastmenge in Form von Schmelze aufgegeben werden.

Selbstverständlich können auch beide Schritte einzeln oder nacheinander auf Doppelbandpressen durchgeführt werden. So läßt sich sowohl die Precursorherstellung als auch die Beschichtung allein auf einer Doppelbandpresse durchführen.

4

Die Doppelbandpresse weist bei Aufgabe der Thermoplasten in Form von Folien mindestens eine Heizzone und eine Kühlzone auf. Die Heiztemperatur muß bei amorphen Thermoplasten mindestens die Glasübergangstemperatur, bei teilkristallinen Thermoplasten mindestens die Kristallschmelztemperatur erreichen. In der Kühlzone wird die Verbundstoffbahn mindestens so weit abgekühlt, daß die nicht mehr an das Band anklebt.

Bei Aufgabe des inneren Thermoplasten in Form von Schmelze und des äußeren in Form von Folie kann mit einer einzigen Temperaturzone gearbeitet werden, die höchstens so hoch temperiert wird, daß der Verbundstoff beim Ablösen nicht am Band anklebt.

Besonders bevorzugt ist ein Verfahren, das auf einem bevorzugt beheizbaren Kalander mit mindestens einem Walzenpaar durchgeführt wird. Hier wird eine Teilmenge oder die Gesamtmenge des Beschichtungsthermoplasten in Folienform auf den Oberflächen der Walzen eingezogen, während das Metallfasergebilde zusammen mit Thermoplastschmelze in den so mit Thermoplastfolien ausgekleideten Spalt eingezogen wird. Foliendicke und Heiztemperatur sind so zu wählen, daß eine ausreichende Imprägnierung der Metallfasern mit Thermoplast und eine gute Verbindung zwischen Folie und Schmelze erfolgt sowie ein Ankleben an den Kalanderwalzen verhindert wird.

Selbstverständlich sind auch diskontinuierliche Verfahren auf statischen Taktpressen oder Etagenpressen möglich, wobei die Thermoplaste bevorzugt als Folien eingezogen werden.

Fällt der Verbundstoff zunächst in flächiger Form an, so kann beispielsweise zunächst eine Auftrennung in Längsrichtung in Streifen gewünschter Breite erfolgen, die anschließend granuliert werden können. Besonders vorteilhaft ist die Granulierung mit einem Bandgranulator. Das Auftrennen kann beispielsweise mechanisch über Schneidvorrichtungen oder durch Wasserstrahl oder durch Laserstrahlen erfolgen.

Bei anderen möglichen Verfahren wird der Kunststoff aus der Lösung, Suspension oder Latex aufgegeben. Dabei müssen zunächst Lösungs- oder Suspendiermittel entfernt werden. Besonders aus der Lösung können dünne Imprägnierschichten und damit hohe Metallfaser-Gehalte des Precursors erreicht werden. Kunststoffpulver können beispielsweise durch Wirbelsintern oder Pulverspritzen aufgebracht werden. Die Beschichtung erfolgt nach den angegebenen Verfahrensschritten, beispielsweise in einer beheizten Düse, einem Kalander oder einer kontinuierlichen oder diskontinuierlichen Presse unter gleichzeitiger Kompaktierung des Precursors.

Thermoplastische Kunststoffe können auch in Form von Fasern oder Folienbändchen vorliegen, beispielsweise in Form von gemischten Faserbündeln oder von Mischtextilien aus Metall- und Kunststoffasern.

Wird die Polymerisation oder Vernetzung direkt auf der Metallfaseroberfläche durchgeführt, so ergibt sich der verfahrenstechnische Vorteil, daß die Imprägnierung des Metallfasergebildes zunächst in einer niedrigviskosen, vergleichsweise niedermolekularen Ausgangssubstanz erfolgen kann. Zur Imprägnierung sind Vorrichtungen nach Fig. 1 einsetzbar, wobei die niedrigere Viskosität eine höhere Produktionsgeschwindigkeit oder eine bessere Imprägnierung erlaubt. Bei Thermoplasten erfolgt die Polymerisation zwischen Formdüse 7 und Abzug 10 in einer beheizten Verweilzeitstrecke.

Da in einem niedrigviskosen Imprägniermedium dünnere Oberflächenschichten erzeugt werden können, ist auch ein Einsatz der mit vernetzten Duromeren beschichteten Metallfasern im Thermoplastbereich denkbar.

Zusätzlich zu den Metallfasern kann das Precursormaterial auch Verstärkungsfasern aller Art, beispielsweise Glasfasern, enthalten.

Der nach diesem Verfahrensschritt in verschiedenen möglichen Vorrichtungen erzeugte Precursorwerkstoff wird in einem zweiten Verfahrensschritt mit einer anderen, thermoplastischen Matrix umhüllt. Die Umhüllung kann nach einem beliebigen Verfahren durchgeführt werden. Beispielsweise können alle zur Imprägnierung der Metallfasern geeigneten Verfahren angewandt werden. Möglich ist auch eine Ummantelung mit Thermoplasten nach dem Reaction-Injection-Moulding-Verfahren.

Als Matrixmaterialien für die Umhüllung des Precursors können beliebige thermoplastische Polymere in Substanz, Lösung, als Dispersion oder in Form von Folien eingesetzt werden. Auch die Verwendung von Monomeren und anderen Vorprodukten dieser Polymere ist möglich. Es empfiehlt sich für die Umhüllung ein Material mit niedrigerer Viskosität als das für die Imprägnierung verwendete Polymere. Im allgemeinen sollte der Unterschied in den Viskositäten $\Delta_\epsilon = 20$ Pa.s betragen. Als Beispiele solcher Thermoplaste seien genannt:

Olefin- und Polyolefin-Homo-, Propf- und Copolymerisate z. B.: Polyethylen, Polypropylen, Polybuten, Polyisobutylen, PVC, Ethylenvinylacetatpolymere, fluorhaltige Polymere, Polyacetale, Polystyrol, Styrol-Copolymerisate, aromatische, aliphatische und gemischte Polyester und Polyamide und -imide, Polyether, Polycarbonate, Polyurethane, Polyharnstoffe und andere Polymere nach dem Polyisocyanat-Polyadditionsverfahren, Polyacrylate, Polyphenylenoxid, Polysulfide, PPS, Polysulfone, Polyethersulfone, Polyetherketo-

5

EP 0 335 186 A2

ne, Polyetheresterketone. Es können auch beliebige Mischungen und Blends dieser Polymere eingesetzt werden. Die Polymere können gegebenenfalls auch weitere Zusätze wie Plastifizierungsmittel, Antioxidantien, Trennmittel, Wachse oder andere Polymeradditive, wie sie z. B. in E. W. Flick: Plastics Additives, Noyes Publications, Park Ridge, New Jersey, USA, beschrieben sind, enthalten. Die erfindungsgemäß einzusetzenden Thermoplaste können auch Feststoffe beliebiger Art und Zusammensetzung enthalten; diese können organischer oder anorganischer Natur sein und werden im Rahmen dieser Erfindung der Einfachheit halber als Füllstoff bezeichnet. Als Beispiel für solche Stoffe seien genannt:

Carbonate wie Kreide oder Dolomit, Silikate wie Talkum, Kaolin, Glimmer, Wollastonit, usw., Siliciumdioxid, Aluminiumoxid, Aluminiumtrihydrat, Ruß, Graphit, Kohle u. ä., Glasfasern, Glaskugeln, Gesteinsmehl, Hohlglaskugeln, Verstärkungsfasern wie z.B. Glas-, Kohlenstoff-, Graphit- und Polymerfasern, Siliciumcarbid und -nitrid, Aluminiumtitanat sowie andere Pulver für die Keramikherstellung, Molybdänsulfid, Zinksulfid, Zinkoxid, organische und anorganische Pigmente, verschiedene Metalloxide, Metallpulver und -fasern, metallisierte Fasern und andere metallisierte Füllstoffe, Flugasche, Mikroballons, $TiO_2$, Zemente, MgO, Mg-$(OH)_2$, Bor, Silicium usw. Es können auch mehrere Feststoffe nebeneinander vorliegen, z.B. Titandioxid und ein Pigment oder eine Kombination aus Glaskugeln und Glasfasern.

Die Verstärkungsfasern können in Form von Rovings, Garnen, Zwirnen, Seilen endlos oder als Schnittfaser vorliegen. Sie können auch in textiler Form beispielsweise als Endlosmatten, Schnittmatten, Gewebe, Gestricke, Gewirke in flächige Verbundstoffe eingearbeitet werden, wobei das erfindungsgemäße Verbundstoffkorn nach dem Zerschneiden entsprechende Anteile enthält.

Die Füllstoffe können amorph oder kristallin sein, massiv, porös oder Hohlkörper sein, z. B. die Gestalt von Pulvern, Kugeln, Plättchen, Nadeln, Hanteln oder Fasern besitzen.

Sie werden in Mengen von 0,1 - 90, bevorzugt 0,5 - 60, besonders bevorzugt 5 - 40 Gew.-%, mit den nachstehenden Matrixstoffen nach an sich bekannten Verfahren vermischt.

Die Auswahl der Polymere für die Herstellung der erfindungsgemäßen Verbundstoffe ist einfach, und der Fachmann ist mit Hilfe von wenigen Versuchen in der Lage, einen für den gewünschten Zweck optimalen Verbundstoff herzustellen. Der Einsatz verschiedener Stoffe bei der Imprägnierung der Metallfasern und bei der anschließenden Umhüllung führt zu einem besonders vorteilhaften Verhalten der erfindungsgemäßen Verbundstoffe bei deren Weiterverarbeitung zu Formteilen mit abschirmender Wirkung. Durch die Auswahl geeigneter Imprägnierungs/Umhüllungsmaterialien wird gewährleistet, daß die Metallfasern beim Spritzguß oder einer anderen Verarbeitungstechnik geschützt werden, d. h. nicht oder wesentlich weniger, als dem Stand der Technik entspricht, geschädigt werden, und daß sie überraschend gleichmäßig im Formteil verteilt werden.

Die Verstopfung von Einspritzdüsen wird verhindert und eine Beschädigung der Spritzgußmaschine durch Metallabtrieb ganz oder weitgehend unterdrückt.

Es ist nämlich ein weiteres charakteristisches Merkmal der erfindungsgemäßen Verbundwerkstoffe, daß sie einen kompakten, Metallfasern-reichen Bereich enthalten, der dazu führt, daß die vollständige und gleichmäßige Vermischung der Fasern mit dem Umhüllungspolymer und die damit verbundene Scherbeanspruchung erst in einer späteren Phase der Verarbeitung stattfindet, d.h. dann, wenn ein optimaler plastischer Zustand des Umhüllungspolymers erreicht wurde. Damit wird eine besonders schonende Einarbeitung der Metallfasern gewährleistet.

Durch die Zusammensetzung der erfindungsgemäßen Verbundstoffe wird auch eine Entmischung der imprägnierten Metallfasern und der Thermoplast-Matrix weitgehend verhindert, die zu starken Inhomogenitäten im Formteil führen würde.

Als typische Beispiele für Polymerkombinationen, die für die Herstellung des Precursors bzw. dessen Ummantelung eingesetzt werden können, seien z. B. Polyamid/Thermoplastgranulat und Polycarbonat-Polymere genannt:

Polyamid 66/Polyamid 6, Polyamid 66/Glasfaser enthaltendes Polyamid 6, Polyamid 66/Polycarbonat, Polycarbonat/Polyamid, Polyamidimid-Polyamid 66/ Polycarbonat, Polyester, Polyamid 6, Polyamid 6/Polycarbonat.

Weitere Kombinationen können leicht aus den oben genannten Imprägnierungs- bzw. Umhüllungsmaterialien abgeleitet werden.

Die erfindungsgemäßen Verbundstoffe haben bevorzugt einen Metallfaseranteil von 20-70 Vol.-% im Precursor und 2 - 30 Vol.-% im Verbundstoff.

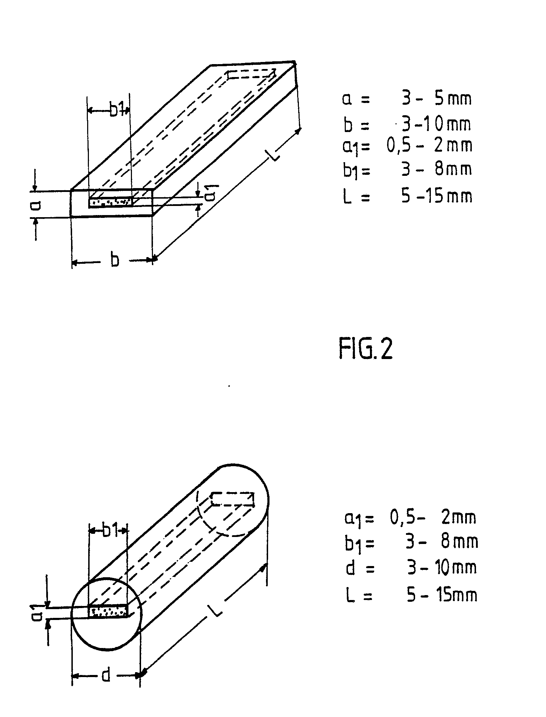

Die nach dem erfindungsgemäßen Verfahren erhaltenen Verbundstoffe können unmittelbar nach der Ummantelung des Precursors in Längen von 1 - 70, bevorzugt 3 -40 mm, geschnitten werden. Beispiele solcher Verbundstoffe sind in Fig. 2 aufgeführt. Sie können aber auch zuerst als endlose Verbundwerkstoffe hergestellt werden und erst vor der jeweiligen Weiterverarbeitung granuliert werden. Die erfindungsgemäßen Verbundstoffe eignen sich direkt für die Herstellung von Formteilen und/oder Folien mit abschirmender

6

Wirkung gegenüber elektromagnetischer Strahlung nach dem Spritzgußverfahren, durch Extrudieren oder Kalandrieren. Sie können auch zum Compoundieren eingesetzt werden.

Auch wenn die erfindungsgemäßen Verbundstoffe bei der Herstellung von abschirmenden Formteilen auch in Abmischungen mit reinen, gegebenenfalls von denen bei ihrer Herstellung eingesetzten verschiedenen Polymeren eingesetzt werden können, so werden sie besonders bevorzugt direkt eingesetzt. Es ist nämlich der besondere technische Vorteil der erfindungsgemäßen Verbundstoffe, daß sie ein für den jeweiligen Abschirmzweck optimales Verhältnis Metallfasern/Polymer besitzen. Dadurch wird eine reproduzierbare Herstellung von Formteilen mit einem gewünschten, weitgehend konstanten Gehalt an Metallfasern gewährleistet. Der abschirmende Formteil kann in einem einzigen Verfahrensschritt hergestellt werden, d. h. ein Vorcompoundieren, bei der die Metallfasern geschert und dadurch beschädigt würden, kann entfallen.

Die mit Hilfe der erfindungsgemäßen Verbundstoffe erhältlichen Formkörper haben im allgemeinen einen Metallgehalt von 1 - 30 Vol.-% und eine Abschirmwirkung bei 27 MHz von mehr als 15 dB (magnetische Komponente, Nahfeld).

Der Oberflächen- und Durchgangswiderstand der Formteile gemäß DIN 53482 beträgt im allgemeinen mehr als $10^5 \, \Omega \cdot cm$.

Bei den in den nachfolgenden Beispielen angegebenen Produktenbezeichnungen handelt es sich zum Teil um eingetragene Warenzeichen.

Beispiel 1

In einer Imprägnieranlage nach Fig. 1 wurden 1.000 m eines Bandprofils 4 mm $\cdot$ 0,8 mm hergestellt. Als Matrixmaterial diente Polyamid 6,6 (Bayer-Durethan A 30 S). Es wurden 500 Kupferdrähte mit 50 μm Durchmesser (Hersteller: Harländer und Schmidt, Roth bei Nürnberg) von 5 Kettbäumen zu je 100 Fäden abgezogen. Das erhaltene Band enthielt 30,7 Vol.-% oder 77,9 Gew.-% Kupfer. Der Meter Band wog 11,3 g.

Das Band wurde in einem Drahtummantelungsextruder mit verschiedenen Mengen Polyamid 6 (Durethan B 305, Bayer AG) umhüllt und anschließend in Teile von 15 mm Länge geschnitten.

Beispiel 2

Es wurde wie im Beispiel 1 beschrieben gearbeitet, jedoch wurden als Umhüllungsmaterial Polycarbonat-Polymere (Makrolon 2400 (Beispiel 2A) bzw. 2800 (Beispiel 2B), Bayer AG) eingesetzt.

Beispiel 3

Es wurde wie im Beispiel 1 beschrieben gearbeitet, jedoch wurde als Umhüllungsmaterial glasfaserverstärktes Polyamid (Durethan BKV 15, Bayer AG) eingesetzt.

Beispiel 4

Es wurde wie im Beispiel 1 beschrieben gearbeitet, jedoch wurde für die Imprägnierung von Metalldrähten Polycarbonat verwendet (Makrolon 2800, Bayer AG).

Beispiel 5

Es wurde wie im Beispiel 1 beschrieben gearbeitet, jedoch wurde für die Imprägnierung Polyamid 6 (Durethan B 30 S, Bayer AG) und für die Umhüllung Polycarbonat (Makrolon 2400, Bayer AG) eingesetzt.

Beispiel 6

Es wurde wie im Beispiel 1 beschrieben gearbeitet, jedoch wurde für die Imprägnierung ein Polycarbonat (Makrolon 2800, Bayer AG) und für die Ummantelung ein Polymerblend aus Acrylnitril-Butadien-Styrol und Polycarbonat (Bayblend T 65 MN, Bayer AG) verwendet.

### Beispiel 7

Es wurde wie im Beispiel 1 beschrieben gearbeitet, jedoch mit 800 Kupferdrähten und Polyphenylensulfid-Matrix. Dabei ergab sich ein Band mit 49,0 Vol.-% oder 88,5 Gew.-% Kupferanteil. Das Band wog 15,8 g/m und wurde so mit Polyamid 6 (Durethan B 30 S, Bayer AG) umhüllt, daß ein Verbundstoff mit 30 Gew.-% Kupfer entstand; dieser wurde in 10 mm lange Teile geschnitten.

### Beispiel 8

Es wurde wie im Beispiel 1 beschrieben gearbeitet, jedoch mit 1.000 Kupferdrähten und Polycarbonat (Makrolon 2800) als Matrixwerkstoff. Dabei ergab sich ein Band mit 61,3 Vol.-% bzw. 92,7 Gew.-% Kupferanteil. Das Band wog 18,9 g/m und wurde mit einer Polyamid 6-Matrix so umhüllt, daß ein Verbundwerkstoff mit 32 Gew.-% Kupfer entstand; dieser wurde in 15 mm lange Teile geschnitten.

### Beispiel 9

Analog Beispiel 1 wurde ein Rundprofil mit einem Durchmesser von 3 mm hergestellt mit feuerverzinkten Kupferdrähten von 100 μm Durchmesser (Hersteller: Lacroix und Kress, Klasing, Bramsche). Mit 500 Drähten in einer Polyamid 6,6-Matrix ergab sich ein Kupfergehalt von 55,5 Vol.-% bzw. 90,7 Gew.-%. Das Profil wog 38,6 g/m und wurde so mit Polyamid 6 umhüllt, daß ein Verbundstoff mit 30 Gew.-% Metall entstand; dieser wurde in 15 mm lange Teile geschnitten.

### Beispiel 10

Ein analog Beispiel 1 hergestelltes Bandprofil 4,5 mm • 0,5 mm mit 1.000 Kupferdrähten von 40 μm Durchmesser und Polyamid 6,6-Matrix ergab einen Kupfergehalt von 31,7 Vol.-% bzw. 78,7 Gew.-% bei einem Gewicht von 8,0 g/m. Dieses Band wurde so mit Polyamid 6 (Durethan B 30 S) ummantelt, daß ein Verbundwerkstoff mit 27 Gew.-% Kupfer entstand, der anschließend in 15 mm lange Teile geschnitten wurde.

### Beispiel 11

Es wurde wie im Beispiel 1 beschrieben gearbeitet, jedoch wurde zur Imprägnierung ein Liquid Crystal Polymer (LCP) (Bayer-Versuchsprodukt KU 1-9220) verwendet. Bei 31,7 Vol.-% ergaben sich hier 75,3 Gew.-% und ein Bandgewicht von 8,4 g/m. Das Band wurde so mit Polyamid 6 (Durethan B 30 S) umhüllt, daß ein Verbundstoff mit 29 Gew.-% Kupfer entstand, der anschließend in 15 mm lange Teile geschnitten wurde.

### Beispiel 12

Es wurde wie im Beispiel 1 beschrieben gearbeitet, jedoch wurde in das Band zusätzlich ein Roving von 1.200 tex Glasfaser eingearbeitet. Nach Umhüllung mit Polyamid 6 enthielt der erhaltene Verbundstoff 25 Gew.-% Kupfer.

### Beispiel 13

Es wurde wie im Beispiel 1 beschrieben gearbeitet, jedoch wurde als Umhüllungsmaterial Polycarbonat (Makrolon 2400) eingesetzt. Die Länge des erfindungsgemäßen Verbundstoffes betrug 7 mm.

### Beispiel 14

Es wurde wie im Beispiel 1 beschrieben gearbeitet, jedoch wurde als Metalldraht ein versilberter Kupferdraht der Firma Harländer und Schmidt mit einem Durchmesser von 59 μm verwendet. Mit 500 Drähten wurde in Polyamid 6,6-Matrix ein Kupfergehalt von 42,7 Vol.-% oder 85,6 Gew.-% erreicht. Das Band wog 14,3 g/m und wurde mit verschiedenen Mengen Polyamid 6 (Durethan B 30 S) umhüllt und anschließend in 15 mm lange Teile geschnitten.

Anwendungsbeispiele

Beispiel 15

Die gemäß Beispielen 1 - 14 hergestellten Verbundstoffe wurden durch Spritzguß zu Formteilen verarbeitet, deren abschirmende Wirkung im Bereich des magnetischen Nahfeldes nachfolgend erläutert wird. Die angegebenen Abschirmwerte entsprechen den Normen NSA-No 65-6 und US-MIL-STD 285 (Abstand Sender-Schirm: ca. 50 mm, Lochscheibe 80 mm Durchmesser, Kästen 200 x 100 x 60 mm).

## Tabelle 1

| Verbund-stoff gemäß Beisp. | Metall-gehalt im Form-teil (Gew.-%) | Abschirmung (dB) bei MHz | | | | |
|---|---|---|---|---|---|---|
| | | 0,1 | 1 | 3 | 10 | 27,12 |
| 1 | 18 | 4 | 20 | 27 | 32 | 33 |
| | 29 | 12 | 29 | 39 | 48 | 54 |
| | 37 | 15 | 34 | 44 | 49 | 56 |
| 2 A | 26 | 1 | 8 | 16 | 23 | 28 |
| | 30 | 2 | 13 | 21 | 28 | 36 |
| | 33 | 3 | 16 | 24 | 33 | 42 |
| | 36 | 4 | 20 | 29 | 38 | 50 |
| | 39 | 4 | 21 | 30 | 40 | 53 |
| 2 B | 40 | 4 | 21 | 32 | 42 | 53 |
| 3 | 23 | 4 | 18 | 24 | 30 | 33 |
| | 31 | 11 | 29 | 39 | 48 | 53 |
| 4 | 26 | 4 | 17 | 25 | 32 | 38 |
| | 35 | 9 | 27 | 36 | 47 | 50(a) |
| 5 | 20 | 0,1 | 2 | 3 | 6 | 11 |
| | 24 | 0,3 | 5 | 11 | 17 | 23 |
| | 31 | 2 | 13 | 22 | 29 | 40 |
| | 37 | 3 | 16 | 24 | 34 | 42(a) |
| | 41 | 4 | 20 | 30 | 40 | 47(a) |

Tabelle 1 (Fortsetzung)

| Verbund-stoff gemäß Beisp. | Metall-gehalt im Form-teil (Gew.-%) | Abschirmung (dB) bei MHz | | | | |
|---|---|---|---|---|---|---|
| | | 0,1 | 1 | 3 | 10 | 27,12 |
| 6 | 18 | 4 | 17 | 25 | 31 | 34 |
| | 24 | 7 | 23 | 33 | 42 | 55 |
| | 26 | 8 | 24 | 36 | 47 | – |
| | 29 | 12 | 30 | 42 | 48 | – |
| | 40 | 15 | 36 | 47 | – | – |
| 7 | 30 | – | – | – | – | 32 |
| 8 | 32 | – | – | – | – | 39 |
| 9 | 30 | – | – | – | – | 29 |
| 10 | 27 | – | – | – | – | 37 |
| 11 | 29 | – | – | – | – | 33 |
| 12 | 25 | – | – | – | – | 49 |

Tabelle 1 (Fortsetzung)

| Verbund-stoff gemäß Beisp. | Metall-gehalt im Form-teil (Gew.-%) | Abschirmung (dB) bei MHz | | | | | | |
|---|---|---|---|---|---|---|---|---|
| | | 0,1 | 1 | 5 | 10 | 20 | 30 | 100 |
| 13 | 33 | 3 | 15 | 27 | 33 | 40 | - | - |
| 14 | 8 | 0,3 | 4 | 8 | 10 | 10 | 10 | 12 |
| | 13 | 3 | 14 | 20 | 22 | 24 | 25 | 27 |
| | 17 | 4 | 17 | 26 | 27 | 30 | 30 | 32 |
| | 42 | 24 | 46 | 47 | 48 | 48 | 48 | >60 |

(a) bei 20 MHz

## Ansprüche

1. Metallfasern enthaltende Verbundstoffe, in denen die Fasern weitgehend parallel ausgerichtet sind, erhalten durch Imprägnieren eines Faserbündels aus endlosen Metallfasern, die einen durchschnittlichen Durchmesser von 35 - 200 µm aufweisen, mit einer oder mehreren polymeren haftvermittelnden Substanz-(en), Ummantelung oder Beschichtung des dabei erhaltenen kompakten Precursors mit einer thermoplastischen Matrix und Zerschneiden des so entstandenen Verbundstoffstranges in definierte Längen.

2. Verbundstoffe gemäß Anspruch 1, dadurch gekennzeichnet, daß das (die) Polymere(n) für die Imprägnierung und das für die Ummantelung voneinander verschieden sind.

3. Verbundstoffe gemäß Anspruch 1, dadurch gekennzeichnet, daß sie Metallfasern aus Cu, Ag, Fe, Ni, Co oder deren Legierungen auch mit anderen Metallen oder deren Zwei- oder Mehrschichtkombinationen enthalten und deren Anteil im Precursor 20 - 70 Vol.-% und im Verbundstoff 1 - 30 Vol.-% beträgt.

4. Verbundstoffe gemäß Anspruch 1, dadurch gekennzeichnet, daß die Imprägnierung mit Thermoplastschmelze über Stifte oder Rollen erfolgt, die das zu imprägnierende Faserbündel umlenken.

5. Verbundstoffe gemäß Anspruch 1, dadurch gekennzeichnet, daß die Imprägnierung und Beschichtung in einer Doppelbandpresse, einer Taktpresse oder einem Kalander durchgeführt werden.

6. Verbundstoffe gemäß Anspruch 1, dadurch gekennzeichnet, daß der Precursor in flächiger Form mit Breiten zwischen 2 und 2000 mm ein- oder beidseitig mit Thermoplast beschichtet ist.

7. Verbundstoffe gemäß Anspruch 1, dadurch gekennzeichnet, daß zur Herstellung des Precursors Polyamide, Polyimide, Polycarbonat, Polyurethane, Polyharnstoffe oder andere Polymere nach dem Polyisocyanat-Polyadditionsverfahren, Polyester, Polyolefine, deren Co- und/oder Pfropfcopolymerisate, Polyacrylate, Polyphenylensulfid, Polyether, Styrol-Butadien-Acrylnitril(Co)polymere, Ethylenvinylacetatcopolymere, Polyacetale oder beliebige Blends oder Mischungen dieser Polymere eingesetzt werden.

8. Verfahren zur Herstellung von Formteilen zur Abschirmung von elektromagnetischer Strahlung im Spritzgußverfahren, dadurch gekennzeichnet, daß man Verbundstoffe gemäß Anspruch 1 verwendet.

9. Verfahren nach Anspruch 8, dadurch gekennzeichnet, daß man die Verbundstoffe gemeinsam mit metallfreien Polymer-Pellets als "master batches" verwendet.

10. Verfahren nach Anspruch 8, dadurch gekennzeichnet, daß der Metallgehalt in den Formteilen 1 - 30 Vol.-%, die Abschirmungswirkung bei 27 MHz > 15 dB und der Oberflächen- und Durchgangswiderstand gemäß DIN 53486 > $10^5 \Omega \cdot$ cm betragen.

FIG. 1

a =   3 – 5 mm
b =   3 – 10 mm
$a_1$ =   0,5 – 2 mm
$b_1$ =   3 – 8 mm
L =   5 – 15 mm

## FIG. 2

$a_1$ =   0,5 – 2 mm
$b_1$ =   3 – 8 mm
d =   3 – 10 mm
L =   5 – 15 mm

Le A 25950